# EUROPEAN PATENT APPLICATION

(11) **EP 0 620 069 A1**
(43) Date of publication of application: **19.10.1994**
(21) Application number: 94200633.9
(22) Date of filing: 11.03.1994
(51) Int. Cl.: B23B 31/12

(54) **Apparatus for clamping and/or unclamping tools in a chuck**

(30) Priority: 15.03.1993 IT MI930489
(71) Applicant: Pedrotti, Riccardo, I-20145 Milano (IT); Fontana, Carlotta, I-20145 Milano (IT)
(72) Inventor: Pedrotti, Riccardo, I-20145 Milano (IT)
(74) Representative: Fusina, Gerolamo

(57) **Abstract**

An apparatus to be applied to any machines which make it possible the actuation of said apparatus to be carried out of the same machine, in order to obtain the clamping/unclamping of the tool in the chuck, by realizing the necessary relative motion between the spindle of the chuck (24) and the rotary locking ring (19).

## Description

The present invention relates to an apparatus for clamping and/or unclamping tools in a chuck.

By "chuck" that piece of equipment is meant which is generally applied to machine tools, but not only to them, which is used in order to clamp, or lock, a tool in order that the latter can be driven, generally to rotate, in a per se known way, by the spindle of the same chuck.

Methods or equipment which enable the tool to be clamped/unclamped by revolving a locking ring, which makes a part of the chuck, causing, by rotating, the desired clamping/unclamping action by means of the closing of at least three jaws around the clamping shank of the tool, are already known. The rotation of such a locking ring is often made possible by the use of a purposely provided chuck key which, in order to allow the tool to be clamped and/or unclamped, must be entered into suitable seats provided in the body of the same chuck. In this particular embodiment, a risk may arise at use time if the chuck key is inadvertently left inserted inside its seat.

Complex kinematic assemblies and ratchet gears are furthermore known, which are used in order to make the locking ring integral with the body of the machine tool. According to this embodiment, when the chuck spindle is started up by the same motor means of the machine tools, precisely this starting-up causes the action of tool clamping or unclamping, as a function of the spindle revolution direction.

Clearly, the structural complexity of these assemblies makes the machine a less reliable one, above all when said units are applied to units which should transmit high torque values and high values of revolution speed (number of revolutions per time unit), and which are submitted to impacts and discontinuous operating patterns. Furthermore, the construction complexity makes said units delicate and, surely, more expensive to be manufactured.

The purpose of the present invention is of realizing an apparatus which supplies a solution for the above cited limitations which inherently affect the equipment known from the prior art, with simultaneously simplifying and making safer their use by the operators.

This purpose according to the present invention is achieved by providing an apparatus for clamping and/or unclamping tools in a chuck in which tool clamping means are present which can be actuated by means of an external revolving controlled locking ring, characterized in that between a housing containing motor means for actuating said chuck and said external revolving locking ring, elements are provided for preventing said locking ring from revolving relatively to said housing in order to cause said tool clamping/unclamping means to revolve relatively to said motor means, with an element for enabling said apparatus to operate in clamping/unclamping mode being provided.

The structural and functional characteristics and the advantages offered by an apparatus according to the present invention will be better understood from the following exemplifying, non-limitative disclosure thereof, made by referring to the accompanying schematic drawings, in which:
Figure 1 schematically illustrates a machine, in particular a portable electric drill, to which a chuck of traditional type is applied;
Figures 2, 3 and 4 display a drill to which an apparatus according to the present invention is applied, shown in three main operating position in order to perform the tool clamping/unclamping by the chuck; and
Figures 5 and 6 show a further embodiment of the apparatus according to the present invention in the body of a drill, also in two different positions for performing the tool clamping/unclamping operation.

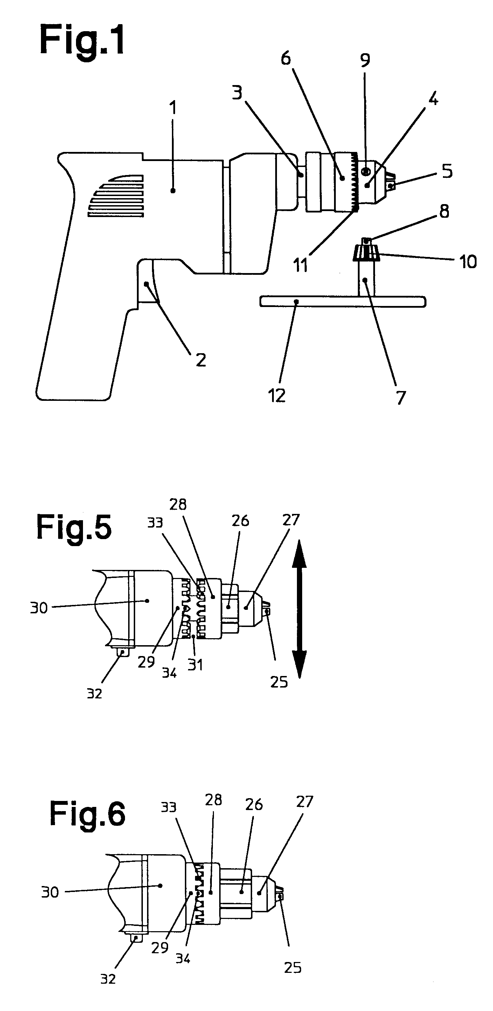

Figure 1 illustrates how one should operate, according to the prior art, in order to clamp a tool inside the chuck of a tool machine, in the present example constituted by a portable drill.

A machine body 1 is provided with an on/off switch 2, and with motor means for driving suitable parts for receiving and fastening a chuck, generally indicated with 3. The chuck is composed by a main body 4 inside which a variable number of jaws 5 slide, designed to clamp a tool, not depicted in the figure.

The rotation of an external locking ring 6, by means of per se known system, causes the clamping and/or unclamping sliding of the chuck jaws 5 inside the interior of the chuck body 4. Said locking ring can be rotated by acting on its external surface in order to cause it to rotate clockwise either manually or by means of a suitable chuck key 7 delivered together with the same chuck. Said chuck key 7 is provided with a pin 8 which can be positioned inside either of a plurality of bores 9 provided in the main body 4 of the chuck, and with a gear wheel 10 coaxial with the pin 8, which can get inmeshed with a corresponding toothing 11, provided on the front edge of the locking ring 6. The ratio of reduction of said two toothings 10, 11; as well as the presence of a long key actuation lever 12 integral with the chuck key 7 makes it possible the tool clamping/unclamping action to be easily performed, as well as enables the user to apply a particularly great force which can secure a correct tool clamping.

As previously said, the drawbacks inhering in an arrangement or equipment realized according to the prior art, relate to two specific requirements: use safety and use semplicity.

As regards the accidents prevention problem, one may easily image which risks may derive from the use of the chuck locking key 7. In particular, a danger situation arises if said key is inadvertently left inside one of the seats 9 provided in the main body 4 of the chuck, when the machine is turned on.

Furthermore, the procedure of tool mounting and clamping results to be particularly uncomfortable as the operator has to perform a number of operations while his hands are engaged by three different items: the drill, the locking key and the tool.

This procedure results to be particularly uncomfortable in particular in the case of machines, such as the portable drill depicted in the example, which are often used in situations in which the possibility does not exist of having available tops and/or containers in which the operator may lay the objects which he is not using. A further consequence also is that the chuck key or the tools are likely to be easily lost.

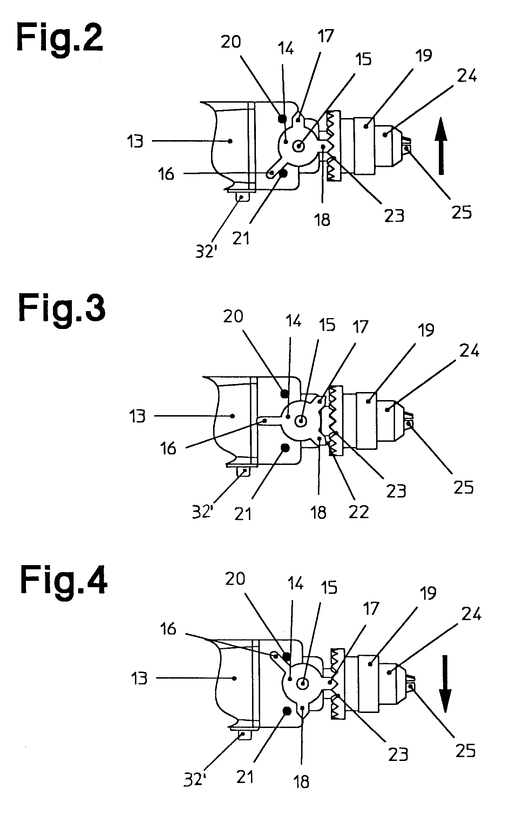

According to the present invention, the cited drawbacks displayed by the equipment known from the prior art can be obviated, e.g., according to as illustrated in Figures 2-4.

In such figures, the main body 13 is schematically displayed of a tool machine, exemplified, for the sake of simplicity, by a portable drill, onto which a revolving pawl 10 is fastened with possibility of rotating around a pin 15. The pawl 14 is provided with an actuation lever 16 and two points 17 and 18 which can be engaged inside a toothing 23 provided in an external revolving locking ring 19 of the body 24 of the chuck of the machine.

The main body 13 of the drill, inside which the chuck motor means are housed, bears, integral with it, two mechanical stop means, or shoulder elements, 20 and 21, interacting with the actuation lever 16 at opposite positions of the latter. In that way, the provision of the pawl 14 hinged in 15, of said two points 17 and 18 and of said two stop means 20 and 21 realizes elements for preventing the locking nut 19 from revolving relatively to the main body 13, or housing, of the drill.

When it is under rest conditions, an apparatus according to the present invention applied to the portable drill takes the position as illustrated in Figure 3. In other terms, in case of lack of action on the actuation lever 16, the pawl 14 automatically takes such a position that the chuck 19 can freely revolve. For that purpose, it is necessary that between the points 17 and 18 and the toothing 23 integral with the locking ring 19 there is a minimal spacing 22, also such as to allow the chuck to perform its axial motion as necessary for the drill to operate in percussion mode.

Figure 2 shows, e.g., how for the rest position an action of tool clamping can be performed, supposing that the revolution direction indicated by arrow F is useful for that purpose. By acting on the actuation lever 16, the pawl 14 is rotated until the lever 16 comes to rest against the stop means 21, consequently preventing said pawl from continuing to rotate. In such a way, the tools 18 gets inmeshed with the toothing 23 of the rotary locking ring 19, and the other tooth 17 is in non-operative position.

Any rotations in the direction of arrow F, i.e., clockwise, of the chuck 24 body, integral with the drill spindle, caused by the motor means being turned on, causes jaws 25 contained inside the chuck body to get clamped around the tool, not shown in the figures.

In practice, the actuation of the locking ring 19 is still performed by causing it to move with relative motion relatively to the body 24 of the chuck. Actually, instead of keeping the latter stationary and causing the locking ring 19 to revolve, thanks to the same action of the motor means of the drill, the locking ring 19 is kept stationary and the chuck body 24 is rotated.

Figure 4 shows how an apparatus according to the present invention may operate in order to also unclamp the tool locked inside a chuck.

In this case, the lever 16 of the pawl 14 is shifted and caused to come to rest against the other stop means 20, in order that the latter may prevent the locking ring from rotating, because the tooth 17 is engaged with the same toothing 23 of the locking ring. When the motor means of the drill is turned on, the rotation of the body 19 of the chuck in counter-clockwise direction and the relevant sliding of the jaws 25 inside its interior are caused, and the jaws 25 are consequently moved apart from each other and got disengaged from the shank of the tool.

The disclosure and the illustrations are rather schematic, and, in order to complete the apparatus according to the present invention, electrical and/or electromechanical, or simply mechanical, safety means can be provided, which secure a correct operation thereof. This because if the motor means of the machine is turned on at the maximal revolution speed and power values thereof, while the action of tool clamping/unclamping is being performed, the whole machine can be damaged, with a dangerous situation for the user being anyway created.

For example, coupled with the pawl 14 there can be provided a switchgear which, by acting as an apparatus enabling element in order to cause said apparatus to operate in locking or unlocking mode, when the actuation lever 16 comes to rest against the stop elements 20 or 21, causes the motor means to run at a limited revolution speed.

As an alternative, there can be provided a separate switchgear 32 which, through interposed drive elements or automatic actuation means, not displayed in the figures, automatically enables and disables the locking elements constituted, in the depicted example, by the teeth 17 and 18.

According to a particularly simplified embodiment from the construction viewpoint, both the pawl 14 and the separate switchgear 32 can be provided.

In order to better implement the apparatus according to the present invention, the teeth 17 and 18 and the toothing 23 on the rotary locking nut 19 can be protected by a guard element, not displayed, both against any possible accidents which may happen owing to the fortuitous contact of the components with the body of the user, as well as against any possibilities of unvoluntary actuation of the apparatus.

Figures 5 and 6 illustrate a second possible embodiment of an equipment according to the present invention.

In this case, provided is a locking ring 26 which is provided, in its turn, with sliding guide elements for a crown gear 28 having a front toothing 33. The teeth 33 of the crown gear 28 are provided on a face thereof, such as to be arranged opposite to a complementary front toothing 34 provided on a crown gear 29 integral with the body 30 of the machine, e.g., in the depicted example, of the portable drill.

The locking of the locking ring 26 during the revolution of the body 27 of the chuck which causes, in cooperation with said locking ring, the relative movement for tool clamping/unclamping (the tool is not depicted), is obtained by causing the crown gear 28 to slide along the locking ring 26, with both toothings 33 and 34 getting coupled.

Figure 5 displays the operating arrangement of the drill, in which said crown gears 28 and 29, i.e., said toothings 33 and 34 are at a distance 31 from each other which allows the chuck to perform its axial movement as necessary during its activity in percussion mode.

Figure 6 illustrates how the translation of the crown gear 28 causes the mutual engagement of toothings 33 and 34 which, following the drill motor means actuation, causes the clamping jaws 25 contained inside the chuck body 27, to get clamped around the tool. However, in the same position as illustrated, by simply reversing the revolution direction, the chuck jaw 25 unclamping operation can be carried out.

By operating by means of an apparatus according to the present invention, all safety requirements are fulfilled, also because all of the separate elements which, according to the prior art, occupied the user's hands, such as the chuck key, are eliminated.

Furthermore, by actuating by one of his hands a lever and/or a switchgear or pushbutton as schematically displayed in 32', arranged in easily accessed and most suitable positions from the ergonomic viewpoint, the user can clamp or unclamp the tool which is positioned inside its seat inside the chuck, and is retained by the other user's hand.

Therefore, according to the present invention, the machine tool manufacturer can implement all of those contrivances technically available to him, in order to realize the maximal use safety for the user and a correct protection of the mechanical and electrical units of the same machine.

As said hereinabove, the embodiments displayed herein are supplied for merely exemplifying purposes, and further contrivances can be used in order to keep the locking ring stationary during the tool clamping/unclamping action. A further example may be constituted by friction systems in lieu of the displayed positive-engagement mechanical elements.

Summing-up, the purposes of the present invention are achieved by applying to the machine tool or to the chuck a whatever device which, when manually, mechanically or electromechanically actuated, makes it possible the chuck locking ring to be made rotatably integral with the machine body. This result could however be achieved by providing an intermediate element between said locking chuck ring and said machine body, in order to cause them to become integral with each other.

## Claims

1. Apparatus for clamping and/or unclamping tools in a chuck in which tool clamping means are present which can be actuated by means of an external revolving controlled locking ring, characterized in that between a housing containing motor means for actuating said chuck and said external revolving locking ring, elements are provided for preventing said locking ring from revolving relatively to said housing in order to cause said tool clamping/unclamping means to revolve relatively to said motor means, with an element for enabling said apparatus to operate in clamping/unclamping mode being provided.

2. Apparatus according to claim 1, characterized in that said actuation element interacts with said motor means, in order to cause it to run at a limited speed.

3. Apparatus according to claim 1, characterized in that said actuation element is constituted by a pushbutton which, through interposed control element automatically enables/disables said locking elements.

4. Apparatus according to claim 3, characterized in that said interposed control elements are constituted by an engagement lever acting between said external revolutionary locking ring and said machine housing in both clamping/unclamping directions.

5. Apparatus according to claim 1, characterized in that said enabling element comprises an engagement lever acting between said external revolutionary locking ring and said machine housing in both clamping/unclamping directions, and a pushbutton which causes the motor means to run at a limited speed.

6. Apparatus according to claim 5, characterized in that said external revolutionary locking ring bears, integral with it, a toothing with which an end of said engagement lever gets engaged, with said engagement lever being hinged onto said machine housing, and its other end getting engaged with shoulder portions provided on said machine housing in order to interact in both its clamping/unclamping directions.

7. Apparatus according to claim 1 or 2, characterized in that with said external revolutionary locking ring, guide elements are integral in order to an element which is provided with a toothing and is axially translatable in order to get engaged with a complementary toothing integral with said machine housing, in order to realize said locking element under rotation conditions.

8. Apparatus according to claim 7, characterized in that means are provided for automatically actuating said toothing bearing element between said two positions, and that said means are activatable by means of a pushbutton provided on said machine housing.
